# EUROPEAN PATENT SPECIFICATION

(11) **EP 2 465 712 B1**
(45) Date of publication and mention of the grant of the patent: **21.10.2020**
(21) Application number: 11194091.2
(22) Date of filing: 16.12.2011
(51) Int. Cl.: B60C 23/04

(54) **Tire pressure monitoring system**
Reifendrucküberwachungssystem
Système de surveillance de pression de pneu

(30) Priority: 04.02.2011 IT TO20110093; 17.12.2010 IT TO20101009
(43) Date of publication of application: 20.06.2012
(73) Proprietor: Bridgestone Europe NV/SA, 1932 Zaventem (BE)
(72) Inventor: Gutman, David, Brussels 1060 (BE); Pitcairn, Dave, Overijse 3090 (BE); Moiraghi, Guido, 20133 Milan (IT); Moiraghi, Paolo, 27020 Marcignano (Frazione Divisa) Pavia (IT); Cortese, Mauro, 20832 Desio Monza e Brianza (IT); Cappitella, Salvatore, 10024 Moncalieri Torino (IT); Cambio, Aniello, 10136 Torino (IT)
(74) Representative: Marchetti, Alessio

(56) References cited:
- EP-A1- 1 942 018
- EP-A2- 1 270 277
- WO-A1-2011/015990
- US-A- 5 783 992
- US-A1- 2005 007 245
- US-A1- 2006 173 648
- US-A1- 2007 193 349
- US-A1- 2008 284 576

## Description

The present invention relates to a tire pressure monitoring apparatus for tires, in particular, but not limited to, such an apparatus for pneumatic tires for a vehicle such as a truck or passenger bus.

Tire pressure monitoring systems can be used to monitor the air pressure inside one or more of the pneumatic tires on an automobile or other vehicle. The systems may report real-time tire pressure information, generally to the driver of the vehicle. Such pressure monitoring systems can be split into two groups; direct and indirect systems.

Direct sensor systems employ physical pressure sensors related to each tire which send the pressure measured by the pressure sensor to a receiver. Indirect sensor systems monitor individual wheel rotation speeds and other signals available outside the tire itself, for example an under inflated tire will generally have a slightly smaller diameter than a correctly inflated tire and will therefore have to rotate faster to cover the same distance as a correctly inflated tire. Vibration analysis can also be used.

Direct sensor systems generally include a battery to power the sensor and transmitter. In order to minimise the size of the battery and therefore the device, the power consumption of any such device must be as low as possible. Further, such systems should be able to perform over a range from -40° C to +125 ° for automotive solutions.

Attention is drawn to the disclosures of US2006/173648, US5783992 A, US2007/193349, EP1,942,018 and WO2011/015990.

The present invention seeks to overcome or ameliorate at least one of the disadvantages associated with the prior art.

According to the invention, there is provided a tire pressure monitoring apparatus with the features of claim 1.

The binding material may be gel, which may be cured by heating, UV exposure, or another manner. The provision of the binding material allows the power source, pressure sensor and antenna to be encased together before they are placed in the pressure chamber, so that they may be placed therein in a single step, so reducing the complexity of the assembly of the apparatus. Further, the gel may be formed from resilient and/or soft material, which can serve to protect, and insulate, both thermally from external temperature changes, and physically from shocks and impacts, the components inside the pressure chamber. The pressure sensor is preferably not entirely encased by the binding material, but is exposed to the ambient pressure inside the chamber, allowing it to accurately measure that pressure.

The chamber is enclosed and substantially airtight when the valve is closed. The internal volume of the body and the chamber may together be airtight, although in communication with one another. Thus, when the apparatus is mounted on a tire, the internal pressure of the tire is provided in the internal volume of the body and in the chamber, but substantially no air leaks from the apparatus.

It is possible to mount the apparatus on a tire valve and inflate the tire through the valve and the apparatus without removal of the apparatus. Further, by mounting a power source, pressure sensor and antenna within a chamber, and exposing these all to the air pressure in the chamber, the size and complexity of the apparatus can be reduced. Still further, the manufacture and assembly of the apparatus can also be simplified, due to the reduced part count.

In an embodiment, the antenna can also emit a signal indicative of a temperature, sensor ID and/or the charge state of the power source, to a receiver. In embodiments, the mounting means comprises a threaded connector configured to mount the apparatus to a tire valve.

In embodiments, the means for opening the tire valve comprises an abutting portion for displacing a valve pin in a tire valve. Such an abutting portion is useful in applications where a valve is used in which a spring biased pin valve is provided.

In embodiments, the power source comprises a battery. This provides reliable power to the pressure sensor and antenna. However, other power sources may also be employed which may generate power from the movement of the tire in order to provide all or some of the power requirement for the pressure sensor and antenna. These may be provided in combination with a battery or other electrical storage device.

In embodiments, control circuitry is provided which comprises the pressure sensor, the control circuitry being mounted in the pressure chamber.

The power source, pressure sensor and antenna may all be exposed to the pressure in the chamber. By providing such a pressure chamber, it is not necessary to provide separate seals between the various parts of the apparatus, which reduces the complexity of the apparatus. Further, the robustness of the apparatus can be increased due to the reduction in the number of parts. Further, as noted above, the size of the apparatus can be consequentially reduced. The reduced size of the apparatus also reduces its effect on the tire and the wheel as they rotate. Further, during assembly, the power source, pressure sensor and antenna can all be placed in the chamber in a single assembly step, the chamber then being closed and sealed, which reduces assembly time and complexity.

In the invention, the control circuitry is configured to activate once it is subjected to a predetermined pressure, and thereafter to control the antenna to emit the signal. Such an activation criterion improves the shelf life of the apparatus as it does not become operational until it is attached to a tire which has been pressurised. The apparatus may also include a receiver. The receiver may be connected to the antenna, and may form part of the control circuitry.

The chamber may be defined by an enclosure and at least part of the enclosure may be formed integrally with the apparatus. The chamber may comprise a first inlet in communication with the valve and a second inlet in communication with the mounting means. Alternatively, a single inlet may be provided between the valve and mounting means and the chamber. In particular, the body may be longitudinally elongate and may define an internal volume therein, the internal volume providing gaseous communication between the valve and the mounting means, and the chamber being in gaseous communication with the internal volume of the body. Thus, the chamber may be laterally offset from the longitudinally direction of the body, or the chamber may be arranged so that the internal volume of the body passes through the chamber. For example, the power source, pressure sensor and/or antenna may be housed "in-line" with the internal volume of the longitudinally elongate body (i.e. along a longitudinal axis of the body) rather than longitudinally offset therefrom. Where the chamber is laterally offset from the body, the apparatus can be compact, particularly in the longitudinal direction, as the valve can be positioned to at least partially overlap within the longitudinal length of the chamber. This can reduce the possibility of the apparatus impacting on objects as the tire on which it is mounted rotates.

Where the chamber is longitudinally offset from the body, a single inlet may be provided between the chamber and the internal volume of the body. This inlet may be a hole around 0.2 mm diameter. The enclosure of the chamber may be formed in two halves, a first half of the enclosure may be attached to the body, for example by brazing, to form an airtight seal around the inlet. The second half of the enclosure can be mounted on the first half and sealed thereto to form an air tight seal, and thereby a pressure chamber, after the components to be housed (power source, antenna and pressure sensor) have been placed in the chamber.

The components may be mounted in a cylindrical housing which holds them in place together so that they can easily be placed in the first half of the enclosure before the second half is put in place and the enclosure is sealed to form the chamber. The assembly of the apparatus can thus be significantly simplified. Further, the housing can provide protection against damage of the components. In embodiments, the housing is cylindrical and in embodiments the power source, antenna and pressure sensor are substantially planar and are mounted substantially parallel to one another. In embodiments the antenna is a coil antenna. Further, the pressure sensor (and control circuitry) may be mounted in the chamber between the power source, which is mounted closer to the longitudinal axis of the body, and the antenna, which is mounted on the opposite side, away from the body. Providing the battery on the innermost side of the enclosure, i.e. closest to the body, provides protection for the battery against extreme temperatures and potential damage by physical contact with other objects that the apparatus may be exposed to. Further, having the antenna on the outer side can reduce power consumption, as well as providing some protection on the pressure sensor and control circuitry from impact.

An aspect of the present invention also relates to a microantenna which is usable in particular, but not exclusively, in a transmitter device for monitoring the pressure of a tire of a motor-vehicle.

This aspect of the present invention seeks to propose an improved microantenna which can be realized in a simple and economical manner and with features having a limited dispersion and good stability over time.

In an aspect of the invention, there is provided a microantenna comprising a support structure including an annular member of an electrically insulating material, in an external surface of which there is provided a helical groove, and to which a circuit-carrying plate is coupled, which extends in a plane orthogonal to the axis of said annular member, at one end thereof, and a wire of an electrically conducting material, wound in the groove of said annular member, and having a first end which engages first holding means of said annular support member, and a second end which is fastened to said circuit-carrying plate. The microantenna may be incorporated into the tire pressure monitoring apparatus of the first aspect of the invention.

The present invention equally relates to a radio-transmitter device, in particular for a device for monitoring the pressure of a tire of a motor-vehicle, comprising a microantenna having the features defined above.

In one aspect, said radio-transmitter comprises an electric pressure transducer and associated transmission circuits carried by the circuit plate of the antenna, a voltage supply battery having terminals fixed to said circuit plate and connected to the circuits carried by said plate, and a mass of an electrically insulating sealing material, which incorporates said circuit plate such as to leave said transducer uncovered, and which incorporates further a portion of the antenna adjacent said plate, and preferably at least part of said battery, such that the antenna, the circuit plate and the battery form a monolithic assembly.

To monitor the pressure of a tire of a motor-vehicle, such a radio-transmitter may also comprise a support casing having an opening adapted to be pneumatically coupled to the inflating valve of a tire, in said casing there being mounted said monolithic assembly including the antenna, the circuit plate and the battery, such that the opening of said casing is in pneumatic communication with a region towards which the pressure transducer faces.

The monolithic assembly including the antenna, the circuit plate, and the battery may be mounted in the support casing with a ring seal, such that the region inside said casing is, in use, in communication only with the region inside the tire with which the device is associated.

The casing may be coupled laterally to a prolongation tube having one end adapted to be sealingly coupled to an inflating valve of a tire, and the other end is provided with a removable sealing cap; said opening of the casing being in pneumatic communication with a conduit defined in said prolongation tube.

In an aspect of the invention, there is provided a radio-transmitter, particularly for a device for monitoring the pressure, and possibly the temperature, of a tire of a motor-vehicle, comprising a microantenna which comprises a support structure including an annular member of an electrically insulating material, in an external surface of which there is provided a helical groove, and to which a circuit-carrying plate is coupled, which extends in a plane orthogonal to the axis of said annular member, at one end thereof, and a wire of an electrically conducting material, wound in the groove of said annular member, and having a first end which engages holding means of said annular support member, and a second end which is fastened to said circuit-carrying plate. The transmitter further comprises an electric pressure transducer and associated transmission circuits carried by the circuit plate of the antenna, a voltage supply battery having terminals fixed to the circuit plate and connected to circuits and devices carried by said plate, and a mass of an electrically insulating sealing material, possibly a vibration damping material, which incorporates said circuit plate such as to leave said transducer uncovered, and which incorporates further a portion of the antenna adjacent said plate, and preferably at least part of said battery, such that the antenna, the plate and the battery form a monolithic assembly.

Embodiments of the invention will now be described, purely by way of example, with reference to the accompanying drawings, in which:
Figure 1 shows an apparatus according to a first embodiment of the invention;
Figure 2 shows an apparatus according to the first embodiment, partially dissembled;
Figure 3a shows a battery according to the first embodiment;
Figure 3b shows a control circuitry according to the first embodiment;
Figure 3c shows an antenna coil in the apparatus of the first embodiment;
Figure 3d shows an assembly of the antenna coil, control circuitry and battery of Figures 3a-3c;
Figure 3e shows a housing according to the first embodiment;
Figure 3f shows steps of mounting the antenna, control circuitry and battery in the housing;
Figure 4 shows a cross-section through an apparatus according to the first embodiment;
Figure 5 shows an exploded view of an apparatus according to a variant of the first embodiment of the invention;
Figures 6 shows a cross section through an apparatus according to a second embodiment of the invention;
Figures 7 shows cross section marked in figure 6;
Figures 8 and 9 show alternative embodiments of an apparatus according to embodiments of the invention; and
Figures 10 to 13 show further alternative embodiments of an apparatus according to a further embodiment of the invention.

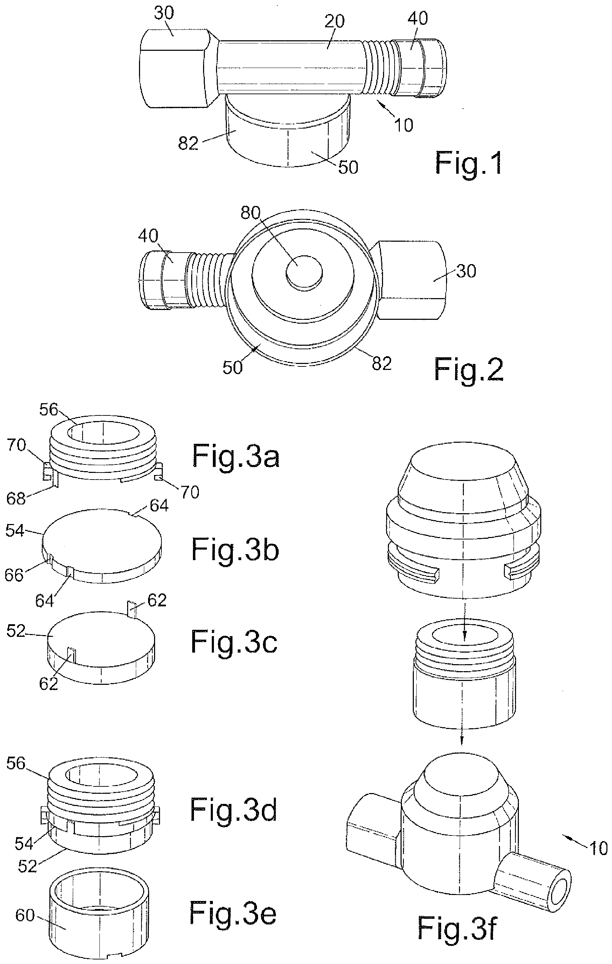

Referring generally to figures 1 to 5 of the drawings, a tire pressure monitoring apparatus 10 comprises a body 20 which is elongate in the present invention enclosing an internal volume 25, mounting means 30 for mounting the apparatus to a tire valve, the mounting means 30 comprising means for opening the tire valve to allow gaseous communication between the internal volume of the tire and the internal volume of the body, a valve 40 in gaseous communication with the internal volume 25 of the body 20 for receiving a tire inflation device to allow inflation of the tire via the apparatus 10, and an enclosed pressure chamber 50 in gaseous communication with the mounting means 30, for receiving the internal pressure of the tire to which the apparatus 10 is mounted, the chamber 50 housing a power source, in the present embodiment in the form of a battery 52, a pressure sensor, in the present embodiment formed as part of control circuitry 54, and an antenna 56 for emitting a signal indicative of the pressure within the chamber 50. The power source 52, control circuitry 54 and antenna 56 are all partially exposed to the pressure within the chamber 50. The battery 52, control circuitry 54 and the antenna 56 are mounted in a hollow cylindrical housing 60.

The chamber 50 is formed by an enclosure having first 82 and second parts. The mounting means 30 (for attachment to a tire valve) is formed at one end of the elongate body 20, and the valve 40 of the apparatus (for receiving a tire inflation device) at the other. Figures 1 and 2 show that the enclosure defining the chamber 50, is mounted to be laterally offset with respect to a longitudinal axis of the body 20.

Referring now to figures 3a to 3f, the battery 52 and antenna 56 have sandwich between them the control circuitry 54. The battery 52, control circuitry 54 and antenna 56 are each substantially disc shaped. As shown in particular in figure 3a, the battery 52 is provided with up-stands 62 extending transversely from one of the major surfaces of the disc shaped battery 52 at the edge thereof. The up-stands are diametrically opposed on the battery 52. As shown in figure 3b, the control circuitry 54 has corresponding diametrically opposed recesses 64 in its edge for receiving the up-stands 62 and locating the battery 52 with the control circuitry 54. Further, an additional recess 66 is provided in the edge of the control circuitry 54, for receiving a locating up-stand 68 of the antenna 56, which extends away from one of the major surfaces of the antenna 56, at the edge thereof. This serves to locate the antenna 56 relative to the control circuitry 54.

As shown in figure 3c, in the present embodiment the antenna 56 also comprises two diametrically opposed clips 70 which have retaining barbs on their ends distal to the antenna 56. In alternative embodiments, three or more such clips may be formed. When the battery 52, control circuitry 54 and antenna 56 are joined together, as shown in figure 3d, the up-stands 62 and 68 extend into the recesses 64. The so-formed assembly is generally cylindrical with the up-stands and clips extending parallel to the longitudinal axis of the cylinder. The clips 70 extend from the antenna 56, around the edge of the control circuitry 54 and battery 52, with the retaining barbs engaging the outer surface of the battery 52 (i.e. that opposing the surface next to the control circuitry 54), to hold the assembly together. Each of the battery 52, control circuitry 54 and antenna 56 is substantially circular transverse to the cylindrical longitudinal axis and each has substantially the same diameter. As shown in figure 3e, the assembly is then placed in the housing 60 with the antenna 56 exposed beyond one axial end of the housing 60. The housing 60 and assembly are placed inside the chamber 50 and the upper part of the enclosure 84 is connected to and sealed to the first part 82 to enclose the assembly within the enclosure as shown in figure 3f.

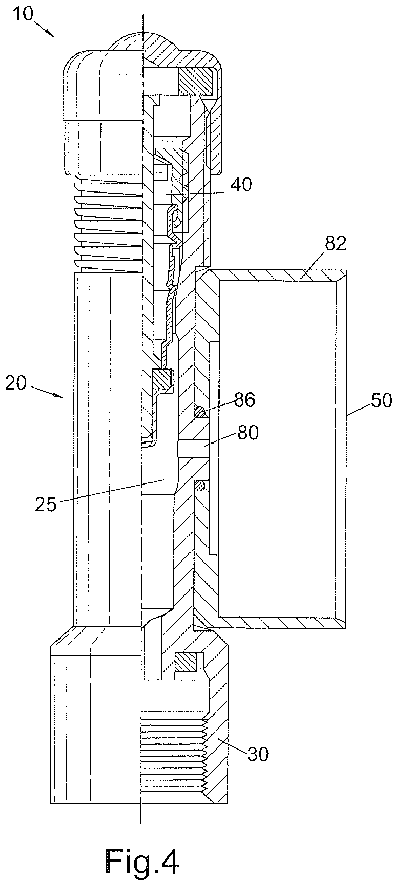

As shown in figure 4, the chamber 50 is connected to the internal volume of the elongate main body 25 via a communicating hole 80. In the present embodiment the diameter of the hole 80 is around 0.2 mm and allows gaseous communication between the chamber 50 and the assembly therein and the internal volume 25 of the body 20. The communicating hole 80 is arranged to extend in a direction transverse to the longitudinal axis of the body.

The first part 82 of the enclosure is brazed, soldered or the like at 86 to the body 20 to form an airtight seal between the two in order to prevent air leakage from the apparatus in use. This first part 82 of the enclosure is also open at the end furthest from the body to allow easy receipt of the housing 60 and assembly, as discussed above. The second part of the enclosure is then placed on top of the assembly and sealed to the first part to form the airtight chamber, the only opening to which is the hole 80.

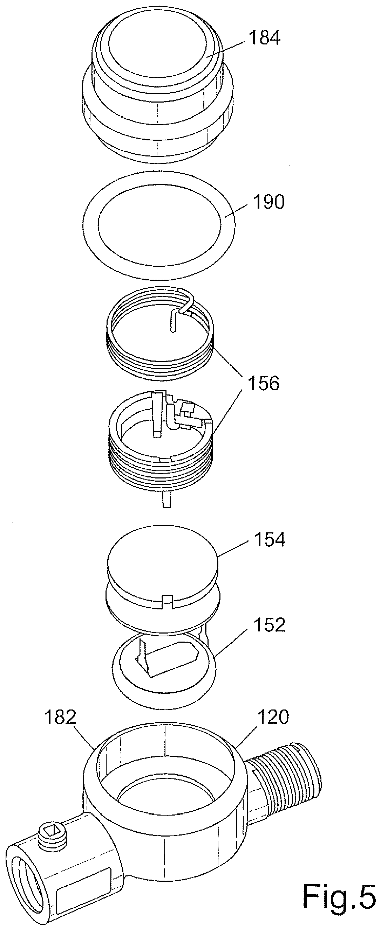

Figure 5 shows a variant of the first embodiment in the form of an exploded diagram. The variant is similar to the first embodiment, and therefore only differences will be discussed herein. The figure shows a second, upper, part 184 of an enclosure and a first, lower, part 182 into which the second part 184 fits. The battery 152, circuitry 154 and antenna 156 again fit within the enclosure as described above with the exception that no housing is provided to hold together those components before they are placed in the enclosure. An O-ring 190 is provided between the surfaces of the first and second parts of the enclosure to seal the chamber formed thereby.

Referring again to figure 4, in use, the connector 30 of the apparatus is screwed onto the tire valve to form a sealed connection between the tire valve and the apparatus 10. The abutting portion displaces the pin of the tire valve, to open the tire valve and allow gaseous communication between the internal volume 25 of the body 20 and the tire. As the internal volume 25 of the body 20 is in gaseous communication with the chamber 50, the chamber 50 now receives the same pressure as the internal pressure of the tire. In order to inflate or deflate the tire, the apparatus does not need to be removed. Instead, an inflation device can be connected to the valve 40 of the apparatus 10 to form a sealed connection between the body 20 and the inflation device. Inflation of the tire can then occur via the internal volume 25 of the body 20.

The assembly in the chamber 50 is subjected to the pressure within the tire. The pressure sensor of the control circuitry 54 detects the pressure in the chamber 50 and the control circuitry 54 also controls the antenna 56 to emit a signal indicative of the pressure within the chamber 50 once the control circuitry 54 is activated by the pressure in the chamber being raised above a predetermined threshold. Before this pressure is reached, the control circuitry is in standby mode, awaiting the activation pressure. In an alternative embodiment which is not according to the invention, the control circuitry is activated from standby mode by an activation signal from a separate device.

Once activated, the control circuitry 54 controls the antenna 56 to emit a wireless signal indicative of at least the pressure within the chamber 50 at least once a minute. In the present embodiment a signal is emitted every four seconds. The signal can reach a distance range of around 5m, while retaining a high signal to noise ratio, resulting in a clear signal at this range. The effective range of the apparatus may be 8m.

The signal is read by a separate receiver. The receiver may be a hand held receiver or may be inboard on a vehicle. The signals may be transmitted at one or more of a range of frequencies including 315, 434, 868 or 915MHz. The energy consumption during the transmission of the apparatus in the present embodiment is around 300nA, while the overall consumption of the device while it is activated is around 600nA. The battery 52 may be a lithium ion battery, for example CR1225.

In embodiments, when the apparatus is activated, as well as an initial pressure signal, an identification code, unique to the individual apparatus, is transmitted to the receiver. At the same time, an identification code of the tire on which the apparatus is mounted may also be received at the receiver, so that the particular combination of tire and apparatus can be recorded.

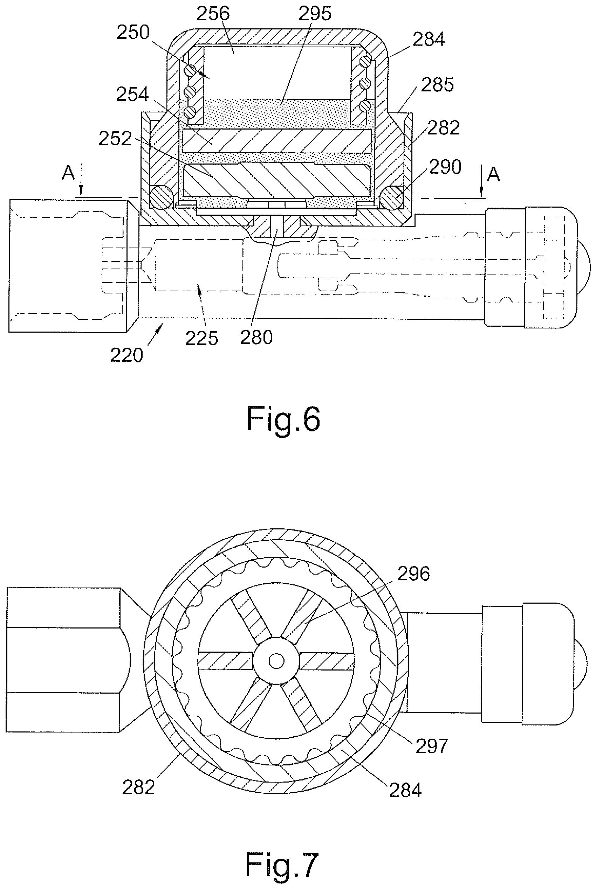

Figures 6 and 7 show a second embodiment of the invention. Again, this embodiment is similar to that disclosed above, and only differences to the earlier embodiments will be discussed. In the second embodiment, instead of a housing to hold together the battery, circuitry and antenna, they are embedded in a resilient gel, which then fits inside the enclosure. As can be seen in figure 6, according to a second embodiment of the invention, there is provided a body 220 having an internal volume 225, as discussed above. Also as discussed above, a chamber 250 is defined by an enclosure formed from a first part 282 which is soldered to a side of the body 220 with a communicating hole 280 formed therebetween and a second part 284 which fits within the first part 282 to form the airtight chamber 250, the only air communication into which is via the hole 280 formed therebetween and a second part 284 which fits within the first part 282 to form the airtight chamber 250, the only air communication into which is via the hole 280. An o-ring 290 is positioned between abutting portions of the first and second parts to form a seal therebetween. The first and second parts are formed as substantially cylindrical elements, closed at one end, with the hole 280 being formed in the first part to allow communication with the body 220. The diameter of the second part is sufficiently smaller than that of the first part to allow the second part to fit inside the open cylindrical extent of the first part, whilst providing minimal gap between the two, so that relative lateral movement is restricted or prevented. The free ends 285 of the first part 284 are bent or crimped radially inwardly towards the second part to retain the second part in sealed cooperation with the first part. In this embodiment, the battery 252, circuitry 254 with pressure sensor, and antenna 256 are encased in a gel 295. Figure 6 shows the sensor device of the second embodiment, together with the cross section taken as shown in Figure 7. Figure 7 shows the first part of the enclosure and second part of the enclosure are generally cylindrical, the second part fitting radially inside the first part. Further, the encasing gel in which the battery 252, circuitry 254 and antenna 256 are encased is also generally cylindrical.

As can be seen in figure 7, on the lower end (i.e. the end furthest within the first part 282 of the enclosure) of the encasing gel 295 are six radially extending protrusions on which the gel 295 sits on the bottom, flat, surface of the first part 282. These protrusions allow the pressure in the body 225 to enter the chamber 250 between them. Additionally, as shown in figure 7, along the cylindrical sides of the encasing gel 295, regular axially extending (i.e. parallel to the cylindrical axis of the enclosure 280) indents 297 are provided. These allow communication of air from the body 220 up the sides of the second part 284 of the enclosure to provide communication between the inner volume 225 of the body and the pressure sensor of the circuitry 254.

In the second embodiment the circuitry 254 comprises a raised, hollow, cylindrical housing not shown and the gel 295 extends up the external sides of this cylindrical housing but does not reach the top, which is open to expose the pressure sensor of the circuitry 254 directly to the air pressure in the chamber. The cylindrical housing surrounds the pressure sensor on the control circuitry 254 and, by ensuring that the gel 295 does not cover the pressure sensor, allows the pressure sensor to detect the air pressure in the chamber 250.

A mold for use in producing the encasing gel may be used. The mold includes a generally cylindrical recess. At the base of the recess, a number of indents (in the present embodiment 6) are provided. Further, around the cylindrical edge of the recess are provided a number of axially extending indents. The recess is not perfectly cylindrical, but is slightly tapered towards its closed end to facilitate removal of the gel once it has been placed in the mold and cured.

In the present embodiment the gel is then poured in in liquid form. The gel is poured in until so that it covers the battery 252 and circuitry 254 and partially covers the antenna 256. The level of the gel stops below the top of the housing so that the pressure sensor remains exposed to the air in the chamber while the antenna 256, circuitry 254, and battery 252 are at least partially encased in and protected by the gel 295 once it has solidified.

In this embodiment the o-ring 290 is arranged around a flange at the free cylindrical end of the second part 284. As well as the recesses, the tapering of the mold produces a gap between the gel 295 and the second part 284 in the region of the free end of the second part 284, which provides an additional air gap to allow pressure equalisation between the internal volume 225 of the body 220 and the chamber 250.

In use, the device according to the second embodiment functions in the same manner as described above with reference to figures 1 to 5.

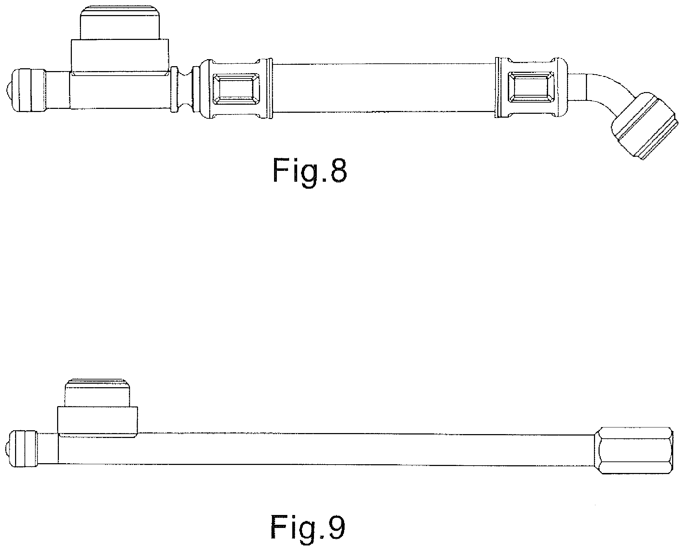

Further embodiments are shown in figures 8 and 9. The operation of the apparatus is the same as that described above. However, the embodiment shown in figure 8 comprises a flexible extension fitted between the connector of the apparatus and the chamber, as a part of the body, the internal volume extending along the length of the flexible portion. The embodiment shown in figure 9 is similar, except that the elongate body is lengthened between the chamber and the connector.

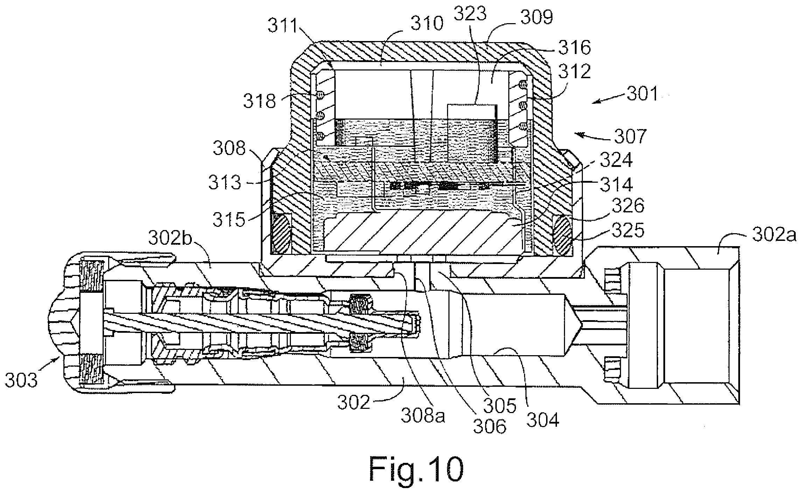

Figures 10 to 13 show a further embodiment of the invention. One or more features of this embodiment may be interchanged with those of the embodiments described above. Many features described in relation to this embodiment may be the same or similar to the corresponding features described above. In Figure 10, 301 denotes a whole a device/tire pressure monitoring apparatus for monitoring the pressure (and possibly also the temperature and/or other parameters) of a tire of a motor-vehicle.

In the embodiment shown by way of example, said device comprises a prolongation tube/body 302, for example made of a metallic material, a first end 302a of which is adapted to be sealingly coupled to the mouth of an inflating valve of a tire and may comprise mounting means, and the other end 302b of which is provided with a removable sealing cap 303, which may comprise a valve.

An axial conduit/internal volume 304 is defined in the prolongation tube 302 and, in use, is in pneumatic communication with the inside of the tire with which the device 301 is associated.

The middle portion of the prolongation tube 302 has a protruding lateral formation 305, in which a transverse passage/communicating hole 306 which is in communication with the conduit 304 is formed.

Around the protruding formation 305, a support casing/enclosure, denoted as a whole by 307, is connected laterally to the prolongation tube 302, for example by means of welding. In the embodiment shown by way of example, said support casing comprises an essentially cup-shaped member/first part 308, for example made of a metallic material, which has an opening 308a in the bottom wall into which the formation 305 of the prolongation tube 302 sealingly extends. A body/second part 309, essentially like an upside-down glass, is coupled to the cup-shaped body 308. In the embodiment shown by way of example, the mouth of the body 308 is bent back on the body 309.

A region or chamber 310, inside which an assembly denoted as a whole by 311 is installed, is defined between the bodies 308 and 309, which are combined to form the support casing 307.

As will become clearer from the text which follows, the assembly 311 includes an antenna 312 with a circuit-carrying plate/control circuitry 313, as well as a voltage supply battery 314.

The antenna 312, the circuit-carrying plate 313 and the battery 314 are expediently incorporated, at least in part and by means of casting, in a mass 315 of an electrically insulating sealing material, such as a gel, possibly a vibration damping material.

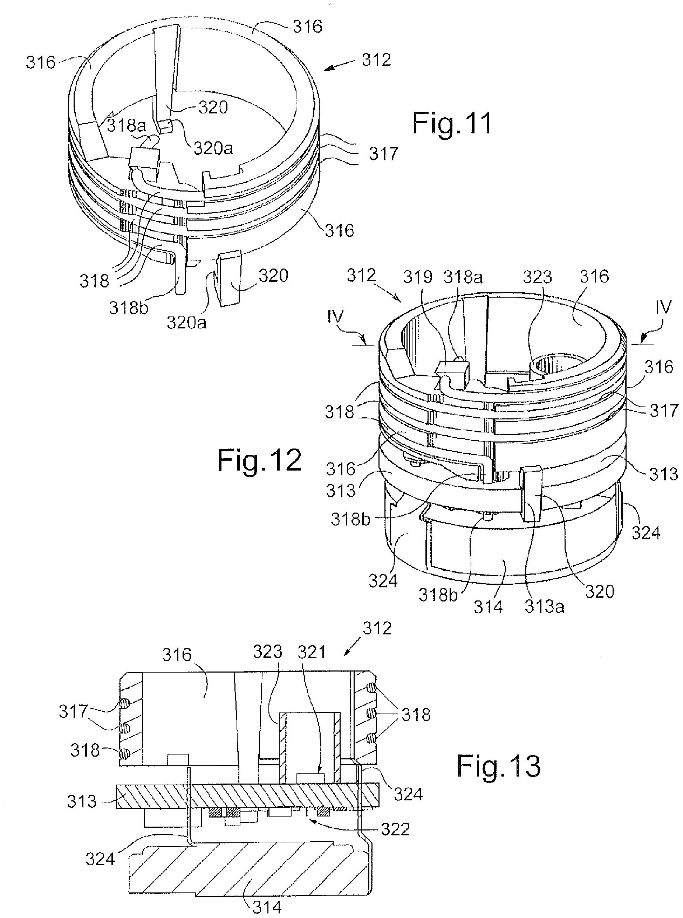

With reference to Figures 11 to 13, the antenna 312, which is also called a microantenna here owing to the reduced dimensions, comprises a support structure which includes an annular member 316 of an electrically insulating material, coupled to the circuit-carrying plate 313.

The external lateral surface of the annular member 316 has a helical groove 317, in which a wire 318 of an electrically conducting material, preferably tin-plated copper, is wound.

The conductive wire 318 forms the radiating member of the antenna and has a first end 318a (Figures 11 and 12) which is bent in an approximately radial direction and is engaged and held by a holder 319 expediently formed integrally with the annular support member 316. The other end of the conductive wire 318, denoted by 318b in Figures 11 and 12, is bent in a direction at least approximately parallel to the axis of the annular member 316, and extends through a corresponding through hole predisposed in the circuit-carrying plate 313 (Figure 12), to which it is fastened by means of welding, for example.

At the bottom, the annular support member 316 has a pair of resilient lugs 320, which are provided at the respective distal ends with holding teeth 320a (Figure 11). Said lugs 320 engage in corresponding peripheral incisions 13a in the circuit-carrying plate 313 (Figure 12), with the respective teeth 320a engaging underneath said plate.

As can be seen more clearly in Figure 13, the upper face of the circuit-carrying plate 313 carries an electric pressure transducer, denoted by 321, and possibly also a temperature sensor. Said plate 313 also has a plurality of further electrical/electronic components, denoted as a whole by 322.

A tubular protection member 323 is arranged on the upper face of the plate 313, around the pressure transducer 321 (Figures 10, 11 and 13), which member is fastened for example by means of adhesive bonding and the functions of which are described hereinbelow.

Conductive plates 324 for the connection of the battery 314 are also connected to the plate 313.

Once the antenna 312 has been assembled with the circuit-carrying plate 313 and the battery 314, as shown in Figures 12 and 13, said assembly is expediently placed in a mould, into which an electrically insulating sealing material, which forms the mass denoted by 315 in Figure 10, is cast. As this operation is being carried out, the tubular member 323 prevents the cast material from also incorporating the pressure transducer 321, and the possible associated temperature sensor.

As can be seen in Figure 10, the mass 315 of an electrically insulating material incorporates the lower portion of the antenna 312, the circuit-carrying plate and the related components, with the exception - as has been mentioned - of the pressure transducer 321 and at least in part the battery 314. The assembly 311 thereby formed can be handled individually and easily installed in the region or chamber 310 defined inside the support casing 307 (Figure 10).

In the assembled state (Figure 10), the arrangement is such that the portion of the region 310 located above the pressure transducer 321 is in pneumatic communication with the passage 306 of the prolongation tube 302, and therefore with the conduit 304 formed in said tube. As a result, in use the transducer 321 is able to generate electrical signals which are indicative of the value of the pressure in the tire with which the monitoring device 301 is operatively associated. Said signals are processed by the devices 322 carried by the circuit plate 313, and are transmitted by means of the antenna 312 to a reception, processing and control apparatus fitted on board the motor-vehicle.

An elastic ring seal 325 (Figure 10) is arranged in an outer annular recess 326 of the body 309 so as to be radially compressed between said body 309 and the side wall of the body 308. Said elastic ring 325 prevents the passage 6 from being in pneumatic communication with that region in which the pressure transducer and the possible temperature transducer are not present.

It is expedient that the annular support member 316 is formed individually by moulding a plastic material having a predetermined dielectric constant. The solution of single moulding is preferable compared with obtaining the annular support member by cutting an insulating tube, inasmuch as this ensures improved dimensional precision and repeatability.

The winding of the conductive wire 318 in the groove of the annular support member 316 guarantees improved dimensional stability and lesser dispersions of the features of the antenna, as compared with solutions with a free spiral wire. In addition, improved dimensional stability of the conductive wire 318 is ensured over the operating life of the device, even when it is exposed to high-intensity mechanical stresses.

## Claims

1. A tire pressure monitoring apparatus (10,301) comprising:
a body (20,220,302) comprising an enclosed internal volume (25,225,304,310);
mounting means (30) for mounting the apparatus to a tire valve (40),
a valve in gaseous communication with the internal volume of the body for receiving a tire inflation device to allow inflation of the tire via the apparatus; and
an enclosed pressure chamber (50,250), in gaseous communication with the mounting means, for receiving the internal pressure of a tire to which the apparatus is mounted, the chamber housing at least:
a power source (52,152,252,314);
a pressure sensor (54,154,254,313); and
an antenna (56,156,256,312) for emitting a signal indicative of a pressure within the chamber;
the power source, pressure sensor and antenna being at least partially encased in a binding material (60,295,315) to maintain their relative positions in the pressure chamber; **characterised in that**
the mounting means comprises means for opening the tire valve to allow gaseous communication between the internal volume of the tire and the internal volume of the body; and **in that**
the apparatus comprises control circuitry (54,154,254,313) housed in the pressure chamber, the control circuitry comprising the pressure sensor, and the control circuitry being configured to activate once it is subjected to a predetermined pressure and thereafter to control the antenna to emit the signal
wherein the control circuitry is configured to control the antenna to produce periodic signals indicative of at least the pressure within the chamber.

2. An apparatus according to claim 1, wherein at least a portion of each of the power source, pressure sensor and antenna are exposed to the pressure in the chamber.

3. An apparatus according to claim 1 or 2, wherein the antenna is for emitting a signal indicative of at least one of a temperature, sensor ID, or battery charge level.

4. An apparatus according to any of claims 1 to 3, wherein at least one signal is emitted every minute after the apparatus is activated.

5. An apparatus according to any preceding claim, wherein the binding material comprises gel (295,315).

6. An apparatus according to any preceding claim, wherein the body is longitudinally elongate and the internal volume provides gaseous communication between the valve and the mounting means.

7. An apparatus according to claim 6, wherein the chamber is in gaseous communication with the internal volume of the body.

8. An apparatus according to any of claims 6 or 7, wherein the chamber is laterally offset from the longitudinal direction of the body.

9. An apparatus according to any of claims 6 to 8, wherein the pressure sensor is mounted in the chamber between the power source, which is mounted closer to and laterally offset from the longitudinal direction of the body, and the antenna, which is mounted away from the body.

10. An apparatus according to any preceding claim, wherein the chamber is formed from two enclosing parts (82,84;182,184;282,284;309,309), the first of which (82,182,282,309) is coupled to the body, and the second of which (84,184,284,308) is coupled to the first part after the pressure sensor, power source and antenna are enclosed within the two parts.

11. An apparatus according to any preceding claim, comprising a housing (60) for aligning and retaining the power source, pressure sensor and antenna together.

12. An apparatus according to any preceding claim, wherein the power source, antenna and pressure sensor are substantially planar and mounted substantially parallel to one another.

13. An apparatus according to any preceding claim, wherein the antenna is a coil antenna.

14. An apparatus according to any preceding claim, wherein the antenna comprises a support structure (316,313)including an annular member of an electrically insulating material (316), in an external surface of which there is provided a helical groove (317), and to which a circuit-carrying plate (313) is coupled, which extends in a plane orthogonal to the axis of said annular member, at one end thereof, and a wire (318)of an electrically conducting material, wound in the groove of said annular member, and having a first end (318a) which engages first holding means (319) of said annular support member, and a second end (318b) which is fastened to said circuit-carrying plate.

## Patentansprüche

1. Reifendrucküberwachungsgerät (10,301), umfassend:
einen Körper (20,220,302), der ein umschlossenes Innenvolumen (25,225,304,310) umfasst;
Montagemittel (30) zum Montieren des Geräts an ein Reifenventil (40),
ein Ventil in Gasverbindung mit dem Innenvolumen des Körpers zum Aufnehmen einer Reifenaufblasvorrichtung, um ein Aufblasen des Reifens über das Gerät zu ermöglichen; und
eine umschlossene Druckkammer (50,250) in Gasverbindung mit dem Montagemittel zum Aufnehmen des Innendrucks eines Reifens, an dem das Gerät montiert ist, wobei das Gehäuse mindestens Folgendes beherbergt:
eine Energiequelle (52,152,252,314);
einen Drucksensor (54,154,254,313); und
eine Antenne (56,156,256,312) zum Emittieren eines Signals, das einen Druck innerhalb der Kammer anzeigt;
wobei die Energiequelle, der Drucksensor und die Antenne mindestens teilweise in einem Bindematerial (60,295,315) eingeschlossen sind, um ihre relativen Positionen in der Druckkammer beizubehalten; **dadurch gekennzeichnet, dass**
das Befestigungsmittel Mittel zum Öffnen des Reifenventils umfasst, um eine Gasverbindung zwischen dem Innenvolumen des Reifens und dem Innenvolumen des Körpers zu ermöglichen; und dadurch, dass
das Gerät eine Steuerschaltung (54,154,254,313) umfasst, die in der Druckkammer untergebracht ist, wobei die Steuerschaltung den Drucksensor umfasst und die Steuerschaltung konfiguriert ist, um sich zu aktivieren, sobald sie einem vorbestimmten Druck ausgesetzt ist und anschließend die Antenne zu steuern, um das Signal zu emittieren,
wobei die Steuerschaltung konfiguriert ist, um die Antenne zu steuern, um periodische Signale zu erzeugen, die mindestens den Druck innerhalb der Kammer anzeigen.

2. Gerät nach Anspruch 1, wobei mindestens ein Abschnitt von jedem der Energiequelle, des Drucksensors und der Antenne gegenüber dem Druck in der Kammer exponiert sind.

3. Gerät nach Anspruch 1 oder 2, wobei die Antenne zum Emittieren eines Signals dient, das mindestens eines von einer Temperatur, einer Sensor-ID oder einem Batterieladezustand anzeigt.

4. Gerät nach einem der Ansprüche 1 bis 3, wobei, nachdem das Gerät aktiviert wird, jede Minute mindestens ein Signal emittiert wird.

5. Gerät nach einem der vorstehenden Ansprüche, wobei das Bindematerial Gel (295,315) umfasst.

6. Gerät nach einem der vorstehenden Ansprüche, wobei der Körper in Längsrichtung langgestreckt ist und das Innenvolumen eine Gasverbindung zwischen dem Ventil und dem Befestigungsmittel bereitstellt.

7. Gerät nach Anspruch 6, wobei die Kammer in Gasverbindung mit dem Innenvolumen des Körpers steht.

8. Gerät nach einem der Ansprüche 6 oder 7, wobei die Kammer seitlich von der Längsrichtung des Körpers versetzt ist.

9. Gerät nach einem der Ansprüche 6 bis 8, wobei der Drucksensor in der Kammer zwischen der Energiequelle, die näher am und von der Längsrichtung des Körpers seitlich versetzt montiert ist, und der Antenne, die von dem Körper weg montiert ist, montiert ist.

10. Gerät nach einem der vorstehenden Ansprüche, wobei die Kammer aus zwei umschließenden Teilen (82,84;182,184;282,284;309,309) gebildet ist, wovon der erste (82,182,282,309) mit dem Körper gekoppelt ist und wovon der zweite (84,184,284,308) mit dem ersten Teil gekoppelt ist, nachdem der Drucksensor, die Energiequelle und die Antenne innerhalb der zwei Teile umschlossen sind.

11. Gerät nach einem der vorstehenden Ansprüche, umfassend ein Gehäuse (60) zum Ausrichten und Zusammenhalten der Energiequelle, des Drucksensors und der Antenne.

12. Gerät nach einem der vorstehenden Ansprüche, wobei die Energiequelle, die Antenne und der Drucksensor im Wesentlichen eben und im Wesentlichen parallel zueinander montiert sind.

13. Gerät nach einem der vorstehenden Ansprüche, wobei die Antenne eine Spulenantenne ist.

14. Gerät nach einem der vorstehenden Ansprüche" wobei die Antenne eine Stützstruktur (316,313) einschließlich eines ringförmigen Elements aus einem elektrisch isolierenden Material (316) umfasst, wobei in einer externen Oberfläche davon eine spiralförmige Nut (317) bereitgestellt ist, und an die eine schaltungstragende Platte (313), die sich an einem Ende davon in einer Ebene senkrecht zu der Achse des ringförmigen Elements erstreckt, und ein Draht (318) eines elektrisch leitenden Materials gekoppelt ist, der in die Nut des ringförmigen Elements gewunden ist und ein erstes Ende (318a), das in ein erstes Haltemittel (319) des ringförmigen Stützelements eingreift, und ein zweites Ende (318b), das an der schaltungstragenden Platte befestigt ist, aufweist.

## Revendications

1. Appareil de surveillance de pression de pneu (10, 301) comprenant :
un corps (20, 220, 302) comprenant un volume interne fermé (25, 225, 304, 310) ;
des moyens de montage (30) pour monter l'appareil sur une valve de pneu (40),
une valve en communication gazeuse avec le volume interne du corps pour recevoir un dispositif de gonflage de pneu pour permettre le gonflage du pneu via l'appareil ; et
une chambre de pression fermée (50, 250), en communication gazeuse avec les moyens de montage, pour recevoir la pression interne d'un pneu auquel l'appareil est monté, le boîtier de chambre comportant au moins :
une source d'alimentation (52, 152, 252, 314) ;
un capteur de pression (54, 154, 254, 313) ; et
une antenne (56, 156, 256, 312) pour émettre un signal indicatif d'une pression à l'intérieur de la chambre ;
la source d'alimentation, un capteur de pression et une antenne étant au moins partiellement enrobés dans un matériau de liaison (60, 295, 315) pour maintenir leurs positions relatives dans la chambre de pression ; **caractérisé en ce que**
les moyens de montage comprennent des moyens d'ouverture de la valve de pneu pour permettre une communication gazeuse entre le volume interne du pneu et le volume interne du corps ; et **en ce que**
l'appareil comprend des circuits de commande (54, 154, 254, 313) logés dans la chambre de pression, les circuits de commande comprenant le capteur de pression, et les circuits de commande étant configurés pour s'activer une fois soumis à une pression prédéterminée, puis pour commander l'antenne pour émettre le signal
dans lequel le circuit de commande est configuré pour commander l'antenne pour produire des signaux périodiques indiquant au moins la pression à l'intérieur de la chambre.

2. Appareil selon la revendication 1, dans lequel au moins une partie de chacun parmi la source d'alimentation, un capteur de pression et une antenne est exposée à la pression dans la chambre.

3. Appareil selon la revendication 1 ou 2, dans lequel l'antenne est destinée à émettre un signal indicatif d'au moins l'une parmi une température, un ID de capteur ou un niveau de charge de batterie.

4. Appareil selon l'une quelconque des revendications 1 à 3, dans lequel au moins un signal est émis toutes les minutes après que l'appareil est activé.

5. Appareil selon une quelconque revendication précédente, dans lequel le matériau de liaison comprend un gel (295, 315).

6. Appareil selon une quelconque revendication précédente, dans lequel le corps est allongé longitudinalement et le volume interne assure une communication gazeuse entre la valve et les moyens de montage.

7. Appareil selon la revendication 6, dans lequel la chambre est en communication gazeuse avec le volume interne du corps.

8. Appareil selon l'une quelconque des revendications 6 ou 7, dans lequel la chambre est décalée latéralement par rapport à la direction longitudinale du corps.

9. Appareil selon l'une quelconque des revendications 6 à 8, dans lequel le capteur de pression est monté dans la chambre entre la source d'alimentation, qui est montée plus près et décalée latéralement de la direction longitudinale du corps, et l'antenne, qui est montée à l'écart du corps.

10. Appareil selon une quelconque revendication précédente, dans lequel la chambre est formée de deux parties enveloppantes (82, 84 ;182, 184 ;282, 284 ;309, 309), dont la première (82, 182, 282, 309) est couplée au corps, et la deuxième (84, 184, 284, 308) est couplée à la première partie après que le capteur de pression, une source d'alimentation et une antenne ont été enclavés dans les deux parties.

11. Appareil selon une quelconque revendication précédente, comprenant un boîtier (60) pour aligner et retenir ensemble la source d'alimentation, un capteur de pression et une antenne.

12. Appareil selon une quelconque revendication précédente, dans lequel la source d'alimentation, une antenne et un capteur de pression sont sensiblement plans et montés sensiblement parallèlement les uns aux autres.

13. Appareil selon une quelconque revendication précédente, dans lequel l'antenne est une antenne à bobine.

14. Appareil selon une quelconque revendication précédente, dans lequel l'antenne comprenant une structure de support (316, 313) comportant un élément annulaire de matériau électriquement isolant (316), dans une surface externe duquel se trouve une rainure hélicoïdale (317), et qui est couplé à une plaque de support de circuit (313), qui s'étend dans un plan orthogonal à l'axe dudit élément annulaire, à l'une de ses extrémités, et une toile (318) d'un matériau électriquement conducteur, enroulé dans la rainure dudit élément annulaire, et ayant une première extrémité (318a) qui vient en prise avec le premier moyen de maintien (319) dudit élément de support annulaire, et une deuxième extrémité (318b) qui est fixée à ladite plaque de support de circuit.
